# FASCICULE DE BREVET EUROPEEN

(11) **EP 2 734 440 B1**
(45) Date de publication et mention de la délivrance du brevet: **10.06.2015**
(21) Numéro de dépôt: 12750421.5
(22) Date de dépôt: 19.07.2012
(51) Int. Cl.: B64B 1/20, B64B 1/66, B64B 1/00

(54) **PROCÉDÉ D'ATTERRISSAGE ET D'AMARRAGE POUR UN BALLON DIRIGEABLE**
LANDUNGS- UND ANLEGEVERFAHREN FÜR EIN LUFTSCHIFF
MOORING METHOD FOR AN AIRSHIP

(30) Priorité: 19.07.2011 FR 1156557
(43) Date de publication de la demande: 28.05.2014
(73) Titulaire: Dirisolar, 92100 Boulogne Billancourt (FR)
(72) Inventeur: TIXIER, Philippe, F-92100 Boulogne Billancourt (FR)
(74) Mandataire: Pontet Allano & Associes
(86) Numéro de dépôt international: PCT/FR2012/051710
(87) Numéro de publication internationale: WO 2013/011241

(56) Documents cités:
- EP-A2- 2 154 070
- FR-A1- 2 581 962
- US-A- 1 567 703
- US-A- 1 726 062
- US-A1- 2010 276 546

## Description

La présente invention concerne un procédé d'atterrissage pour un véhicule aérien de type ballon dirigeable, qui présente une face inférieure de forme plane et est d'une forme générale déterminée pour produire sous l'effet du vent relatif une force résultante globale rabattante à proximité du sol. Ce véhicule comprend en outre un dispositif d'ancrage au sol, fixe ou manoeuvrable depuis ledit véhicule, qui est situé en partie avant dudit véhicule et dépasse vers le bas, en particulier un poinçon à implantation rigide et comprenant une partie expansible par appui d'une rampe contre une noix déplacée en translation.

Ce procédé, comme définit dans la revendication 1, comprend, sous l'effet de la force rabattante avec compensation par maintien d'une assiette cabrée, un vol descendant jusqu'au contact d'une partie arrière du véhicule ; suivi d'une diminution du cabré jusqu'au contact du sol par le dispositif d'ancrage, en particulier avec enfoncement d'un poinçon dans le sol. De préférence, le procédé comprend en outre un arrimage, en particulier à l'aide d'un poinçon expansible, pendant que le véhicule est plaqué au sol sous l'effet de la force rabattante.

### Etat de la Technique

Parmi les véhicules aériens utilisant la portance d'un gaz plus léger que l'air, ceux munis d'une propulsion sont souvent appelés des « ballons dirigeables ».

Les dirigeables ont été utilisés de façon importante pendant plusieurs décennies, par exemple pendant la première moitié du XX^{e} siècle. De nombreux projets voient le jour à nouveau depuis plusieurs décennies, pour des usages commerciaux comme par exemple de l'affichage publicitaire ou du transport de charges lourdes, pour profiter des nombreuses possibilités offertes par cette technologie.

Par exemple, cette technique du « plus léger que l'air » permet un vol lent ou stationnaire, de longue durée, sans bruit et sans consommation d'énergie pour la portance. Elle peut utiliser une technologie moins complexe et moins coûteuse que pour l'aéronautique du « plus lourd que l'air » constituée par les avions et les hélicoptères ou leurs hybrides. Cette technologie peut aussi être mise en oeuvre avec de faibles risques de défaillances mécaniques et un faible degré de criticité en cas de pannes, depuis que l'hélium a remplacé l'hydrogène comme gaz porteur.

Le pilotage et la manoeuvre d'un dirigeable conservent tout de même un certain nombre de difficultés, dont certaines sont liées au gabarit important du corps qui renferme le gaz porteur, et donc à la prise au vent que représente son enveloppe.

L'atterrissage en particulier est une manoeuvre délicate, qui requiert à la fois de bonnes qualités de pilote et une assistance importante au sol, soit en matériel soit en personnel. En effet, lorsqu'il approche du sol dans des conditions de vent non nul, un dirigeable est soumis à des forces irrégulières qui provoquent des embardées verticales importantes et imprévisibles. Ces forces rendent une approche sans risque jusqu'au sol difficile ou impossible au delà d'un vent de l'ordre de 20km/h pour un dirigeable à air chaud, et 40km/h environ pour un dirigeable à hélium dans les configurations réelles actuellement les plus abouties.

C'est pourquoi il est toujours nécessaire de bénéficier d'une assistance au sol. Depuis toujours et encore maintenant, cette assistance est apportée le plus souvent par une équipe de plusieurs personnes qui saisissent des filins descendant du dirigeable depuis une certaine hauteur, et les utilisent ensuite pour l'amener au sol à la main ou pour l'arrimer à un mât par un treuil. Par exemple, un modèle récent de dirigeable à hélium pour douze personnes nécessite de trois à huit personnes et/ou un mât d'arrimage posté sur un camion ou ancré dans des fondations en béton.

Des solutions ont été proposées qui consistent à prévoir au sol des moyens d'accrochage automatique, comme dans le document EP 2 154 070 ou le document FR 2 581 962. Ces solutions restent parfois complexes, et ne permettent pas un atterrissage sans assistance dans un endroit non préparé. US 2010/0276546 A1 est consideré l'état de la technique le plus proche et divulgue un véhicule aérien similaire à celui défini dans la revendication 1, mais sans dispositif d'amerage rigide.

Un but de l'invention est de pallier les inconvénients de l'état de la technique, et en particulier de faciliter l'atterrissage d'un dirigeable, par exemple dans un endroit non préparé et/ou sans assistance au sol.

### Exposé de l'invention

Les ballons sans propulsion, ou ballons libres, ont en général une nacelle suspendue à une enveloppe en forme de sphère ou de goutte d'eau, qui sont les formes les plus simples et les plus compactes obtenues sous l'effet du gonflage d'une enveloppe souple par un gaz porteur, de l'air chaud ou de l'hélium. Les dirigeables, pour faciliter leur progression dans l'air, présentent le plus souvent une enveloppe d'une forme allongée dans la direction de déplacement principal. De façon générale, ils présentent une section transversale circulaire qui optimise la traînée pour un volume donné.

Pour se poser en un point donné par conditions de vent, un dirigeable est obligé de se propulser contre le vent pour obtenir une vitesse nulle par rapport au sol. Lorsqu'il se rapproche du sol, l'écoulement de l'air sur l'enveloppe d'un ballon provoque par effet Venturi une dépression entre le sol et l'enveloppe, exerçant ainsi sur l'enveloppe une force aérodynamique dirigée vers le bas, ou rabattance. Cependant, en fin d'approche mais avant d'être suffisamment bas pour permettre un arrimage autonome ou un débarquement, par exemple en dessous de dix à vingt mètres pour le bas de l'enveloppe, la fermeture de cette même zone entre le sol et l'enveloppe finit par provoquer des phénomènes de compression qui exercent un couple et une force vers le haut, contrariant ainsi la rabattance.

Cette force vers le haut s'exerce d'abord sur la partie avant de l'enveloppe, créant ainsi un couple cabreur qui modifie l'incidence et donc l'équilibre global de l'enveloppe, de façon irrégulière et imprévisible. Souvent, ce changement d'incidence augmente la portance de l'enveloppe et tend à éloigner le dirigeable du sol. Dans certains cas, ce couple cabreur peut ainsi s'amplifier de lui-même sous l'effet du vent, créant une situation instable qui peut parfois aller jusqu'à redresser le dirigeable jusqu'à la verticale, voire le retourner complètement.

Même une fois solidement arrimé au sol, ces forces peuvent parfois aller jusqu'à rompre ou arracher cet arrimage, entraînant souvent la perte ou la destruction du véhicule.

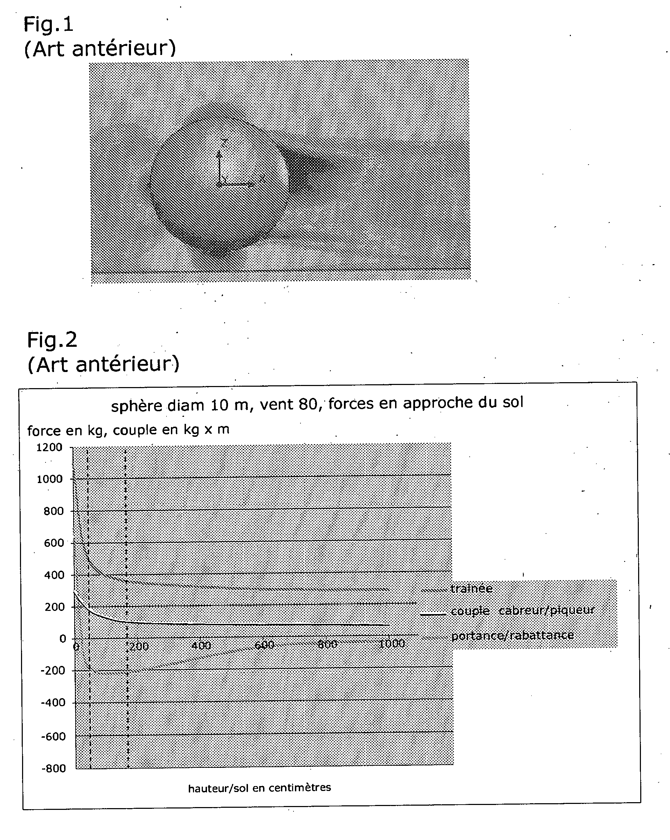

Les FIGURE 1, FIGURE 2, FIGURE 3 et FIGURE 4 illustrent les phénomènes intervenant dans la problématique de l'invention, et leur mode de prise en compte dans l'invention.

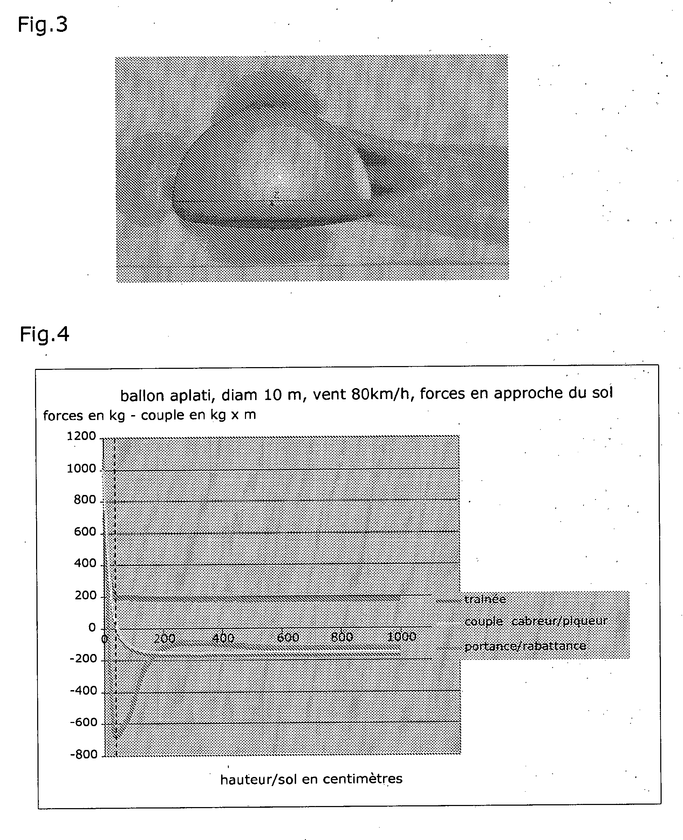

L'inventeur a simulé et étudié les forces exercées sur une forme sphérique par un vent de 80km/h (22m/s) sur une sphère d'un diamètre de 10m, avec un vent de gauche à droite sur la figure, comme illustré en FIGURE 1 mais aussi sur une forme sensiblement en demi-sphère avec un fond aplati comme illustré en FIGURE 3.

Pour la cartographie des vitesses d'écoulement, les zones foncées au dessus et au dessous de la sphère (tendant vers le rouge dans la cartographie en couleur) indiquent des vitesses plus élevées allant de 22 à 33m/s. Les zones foncées situées à l'avant et à l'arrière de la sphère (tendant vers le bleu dans la cartographie en couleur) indiquent des vitesses plus faibles allant de 22 à 0m/s.

La FIGURE 2 représente l'évolution des principales forces exercées par ce vent sur cette sphère lorsqu'elle se rapproche du sol. Les hauteurs indiquées en abscisse correspondent à la hauteur du bas de la sphère au dessus du sol. Lors de l'approche en descente, de la droite vers la gauche de la courbe, on voit que la résultante globale des forces verticales (la courbe de portance/rabattance, en bleu) est vers le bas en augmentation régulière depuis 10m (jusqu'à -200N environ pour cette sphère). Elle se stabilise dans un intervalle assez large situé environ entre 1,50m et 0,50m (entre les deux lignes verticales en pointillés) avant de s'inverser en toute fin d'approche (aux environ de 20cm). De son côté, le moment global (couple cabreur/piqueur) exercé sur la sphère est positif (cabreur) en permanence et augmente en fin d'approche.

La FIGURE 4 représente l'évolution des mêmes forces par un même vent de 80km/h sur une demi-sphère, à fond plat vers le sol, d'un même diamètre de 10m lorsqu'elle se rapproche du sol. En première partie d'approche (au dessus de 2m) la traînée et la rabattance ne varient pas beaucoup. Mais le couple est toujours négatif (c'est à dire « piqueur »)

Lors de la suite de la descente, on voit que la résultante globale des forces verticales est vers le bas et augmente plus tard (à partir de 2m) mais aussi beaucoup plus brutalement jusqu'à un maximum de -600N aux environs de 0,30m (sur la ligne verticale en pointillés). Cette résultante ne repart vers le haut qu'en toute fin d'approche, aux alentours de 0,20m. De son côté, le moment global (couple cabreur/piqueur) exercé sur la demi-sphère est négatif (piqueur) sur la majeure partie de l'approche, et ne devient cabreur qu'en toute fin d'approche (aux environs de 50cm, sur la ligne verticale en pointillés).

A premier abord, ce déclenchement brutal d'une rabattance près de trois fois plus forte paraîtrait un inconvénient important pour améliorer la sécurité et stabilité de l'atterrissage, et nécessiter des manoeuvres plus brutales avec des moyens plus puissants.

### Véhicule

Pourtant, pour faciliter l'approche et l'atterrissage, un véhicule aérien, de type ballon dirigeable motorisé à flottabilité au moins partielle, de préférence allongé dans la direction principale de déplacement est proposé, caractérisé en ce que son enveloppe extérieure présente, de façon stable au moins en phase d'atterrissage, une face inférieure de forme plane ou très peu galbée, rigide et située de préférence en dessous du niveau du poste de pilotage, par exemple avec un rayon de courbure plus de dix ou quinze fois supérieur à celui de la face supérieure, et par exemple dans une région représentant au moins 75% de la silhouette du véhicule dans sa projection horizontale.

Cette forme peut être typiquement celle d'une demi-goutte horizontale avec la face inférieure aplatie et sensiblement parallèle au sol, par exemple une ou plusieurs portions d'ellipsoïde en partie supérieure.

Cette partie supérieure peut comporter par exemple une portion en ellipsoïde d'allongement 2 à l'avant du véhicule et d'allongement 3 à l'arrière, ou une partie arrière dont l'allongement est plus grand que celui de l'avant d'un facteur valant environ racine carrée de deux, ou d'autres formes décrites dans l'ouvrage « Airship Technologies » de Gabriel Khoury, publié dans la collection Cambridge Aerospace Series chez Cambridge University Press.

Dans le cadre de cette définition, on peut déterminer plus précisément la forme extérieure globale du véhicule de façon à obtenir sous l'effet du vent relatif une force résultante globale dirigée vers le sol lorsque ledit dirigeable est en assiette horizontale et éloigné du sol de moins d'une distance déterminée.

A partir de la définition de forme ci-dessus, et ainsi que l'on montré les essais détaillés plus loin, la forme générale fournissant les caractéristiques fonctionnelles définies ici peut être déterminée et optimisée de différentes façons connues dans l'état de la technique, par exemple par des simulations numériques ou physiques.

Auparavant, il a déjà été proposé de réaliser des dirigeable à fond aplati, comme par exemple dans le document US2010/276546 qui propose une forme en fuseau effilée aux deux extrémités avec un fond plat et des ailerons munis de propulseurs à l'avant et à l'arrière. Cependant, très peu de ces formes ont jamais été réalisées matériellement ou en simulation, voire possiblement aucune.

En outre, il est à noter qu'un tel effet de rabattance avec couple piqueur n'a jamais été constaté ni prévu jusqu'à présent. Il n'est d'ailleurs pas certain qu'une forme aussi effilée que celle du document D1 puisse produire un tel effet, et encore moins dans des conditions de stabilité compatibles avec les objectifs de l'invention

Plus particulièrement, l'invention propose un véhicule dont l'enveloppe présente une partie supérieure qui est arrondie et une partie inférieure qui présente, au moins dans le tiers avant du véhicule et de préférence dans les deux tiers avant, une région de plus faible inclinaison (surface « inférieure ») dont l'aire est supérieure voire très supérieure à celle de la région d'inclinaison la plus forte (surface « intermédiaire »). Par exemple, ces deux surfaces peuvent être caractérisées par un rapport R21=S2/S1 valant au moins 1 et de préférence au moins 1,2 voire au moins 2, entre
- d'une part une surface (S2) dite inférieure comprise à l'intérieur d'une deuxième ligne de ceinture (L2) définie par les points de tangence (T45) de l'enveloppe avec un plan (P45) incliné à 45° de l'horizontale, et
- d'autre part une surface (S1) dite intermédiaire, comprise entre ladite deuxième ligne de ceinture (L2) et une première ligne de ceinture (L1) définie par les points de tangence (T90) de l'enveloppe avec un plan vertical (P90).

En effet, dans la partie inférieure de l'enveloppe, sous l'effet du vent et à l'approche du sol, les parties les plus proches de l'horizontale ont tendance à subir une action d'aspiration vers le bas par effet Venturi. Par contre, les parties obliques les plus proches de la verticale subissent aussi une action vers le haut du fait de la poussée directe du vent.

En augmentant la surface inférieure par rapport à la surface intermédiaire, en particulier du côté exposé au vent c'est à dire l'avant et éventuellement le côté, on obtient ainsi la résultante vers le bas et le couple piqueur qui permettent de limiter ou d'éviter l'effet « caisson » près du sol en conditions de vent, et d'obtenir le comportement régulier utilisé par l'invention pour permettre un atterrissage maîtrisé avec pas ou peu d'intervention au sol, ainsi qu'un stationnement plus sûr une fois arrimé.

Ainsi, on voit que l'inventeur propose d'accepter les inconvénients habituellement liés à une force de rabattance plus importante, comme par exemple les risques de choc plus brutal voire d'écrasement au sol. Tout en acceptant et en renforçant ces aspects apparemment négatifs, l'invention propose d'en contrôler les risques pour obtenir une meilleure stabilité globale.

Pour cela, le véhicule comprend :
- une ou plusieurs gouvernes de profondeur agencées pour provoquer sous l'effet du vent relatif une incidence à cabrer suffisante pour produire une force de portance vers le haut, venant ainsi diminuer ou équilibrer ladite force résultante globale vers le sol, permettant ainsi au véhicule de se rapprocher du sol jusqu'à obtenir un contact continu avec le sol, de façon maîtrisée (par exemple à une vitesse de contact et à un instant choisis), dans une position dite position au sol ; et
- un dispositif d'ancrage au sol, fixe ou manoeuvrable depuis ledit véhicule, qui est situé en partie avant dudit véhicule, avec une géométrie agencée pour dépasser vers le bas du reste du véhicule, notamment par rapport à l'élément le plus bas du véhicule lorsque celui-ci est en contact avec le sol dans une assiette où la force résultante globale est nulle ou dirigée vers le bas.

De préférence, cette forme à fond plat du véhicule est combinée avec la présence d'au moins une gouverne de profondeur, agencée pour diminuer ou équilibrer la force résultante globale vers le sol en phase d'atterrissage, sous la forme d'une gouverne aérodynamique mobile située en avant du centre de poussée de la traînée aérodynamique du véhicule.

Ce type de gouverne à l'avant, aussi appelé « canard », peut présenter l'inconvénient de rendre le véhicule plus sensible à la manoeuvre de la gouverne. Il n'a actuellement jamais été mis en oeuvre sur des dirigeables. Il est très utilisé sur les petits avions militaires et est généralement considéré comme délicat à piloter voire dangereux car naturellement instable, particulièrement dans une configuration simple sans asservissement automatique.

Dans le cadre de l'invention, ce type de gouvernes est toutefois proposé en remplacement voire en supplément des gouvernes de profondeurs qui sont habituellement installées dans l'empennage arrière. En effet, il permet par exemple d'obtenir un cabré par montée de l'avant plutôt que par descente de l'arrière, ce qui élargit le champ des manoeuvres possibles et est particulièrement intéressant dans le cas de l'invention.

Les gouvernes de profondeur à l'avant permettent en outre un effet de couple qui va dans le même sens que l'action verticale exercée sur les gouvernes. Cet effet rend le pilotage plus intuitif et plus direct, ce qui se combine avantageusement avec les autres caractéristiques de l'invention pour faciliter l'atterrissage et l'amarrage.

De préférence, le véhicule comprend une ou plusieurs parties de support aptes à prendre appui sur le sol, et dépassant de la face inférieure de l'enveloppe vers le bas d'une distance suffisante pour maintenir le véhicule à une hauteur du sol supérieure à la hauteur à laquelle la force résultante globale redeviendrait portante. Cette hauteur dite d'inversion peut être déterminée, par exemple par simulation physique ou numérique, en fonction de la géométrie précise et des dimensions spécifiques de chaque véhicule.

Typiquement, une bonne position du fond aplati pour ancrer l'appareil dans le vent est ainsi à une hauteur d'environ un à deux mètres au dessus du sol. En référence avec la FIGURE 4, la force rabattante reste dans ce cas importante, et même supérieure à la traînée horizontale, et ces forces génèrent un couple piqueur, de telle sorte que le poinçon faisant pivot reste planté dans le sol.

Selon une particularité préférée, le dispositif d'ancrage comprend une partie pointue, dite poinçon, selon un axe dirigé vers le bas de façon à permettre un enfoncement dans un sol meuble, notamment selon une direction verticale, et est relié au véhicule par des moyens de liaison agencés pour maintenir en phase d'atterrissage un angle sensiblement constant entre le véhicule et l'axe du poinçon.

Selon une autre particularité préférée, les moyens de liaison du poinçon avec le véhicule sont agencés pour permettre une liberté de rotation dudit véhicule autour d'un axe vertical ou transversal au sol, ou de l'axe du poinçon ou entre les deux, qui permet au véhicule de pivoter lorsque le vent change de direction.

De préférence, cette liberté de rotation est combinée avec un débattement en rotation autour d'au moins un axe horizontal, qui permet au véhicule de suivre le vent en pivotant sans forcer sur les moyens de liaison lorsque le poinçon n'est pas parfaitement parallèle à l'axe de rotation du vent, par exemple lorsque le sol n'est pas horizontal ou que le vent présente des turbulences verticales.

Selon encore une autre particularité préférée, le poinçon du dispositif d'ancrage est muni de moyens de rétention situés dans une partie du poinçon s'enfonçant dans le sol, lesquels moyens de rétention comprennent au moins deux éléments mobiles entre au moins
- une position dite repliée, autorisant l'enfoncement de ladite partie d'ancrage dans un sol meuble ; et
- une position dite expansée, où les éléments mobiles sont écartés de la direction d'enfoncement de ladite partie d'ancrage de façon à exercer une force s'opposant au retrait de ladite partie d'ancrage lorsque celle-ci est enfoncée dans le sol.

### Atterrissage

Selon l'invention, l'atterrissage d'un tel véhicule aérien comprend alors les étapes suivantes.

L'approche commence typiquement par une descente vers le sol avec une vitesse vers l'avant non nulle par rapport à l'atmosphère, contrôlée par exemple par une commande des gouvernes de profondeur ajustées pour obtenir un angle de piqué fournissant une résultante aérodynamique vers le bas.

Cette descente est poursuivie jusqu'à une distance du sol à laquelle la vitesse du vent relatif exerce sur le dirigeable, même en assiette neutre, une force résultante globale dirigée vers le sol, dite force rabattante.

Les gouvernes de profondeur sont alors commandées de façon à obtenir un angle de cabré fournissant une portance qui compense la force rabattante.

En compensant cette force rabattante de façon totale, il est alors possible de maintenir un vol stationnaire proche du sol, immobile ou en mouvement maîtrisé par rapport au sol.

En compensant cette force rabattante de façon partielle, on obtient alors un vol descendant, jusqu'à obtenir un contact d'une partie arrière du dirigeable avec le sol. Selon une particularité actuellement préférée, on ajuste la propulsion pour terminer en vitesse horizontale faible ou nulle par rapport au sol pendant la descente et lors du contact.

On commande alors les gouvernes de profondeur de façon à obtenir progressivement une réduction de l'angle de cabré, jusqu'à obtenir un contact d'une partie avant du dirigeable avec le sol sous l'effet de cette force rabattante.

L'avant reste alors plaqué contre le sol sous l'effet du vent, et il est ainsi possible de procéder à l'arrimage au sol de l'avant du véhicule, par exemple depuis l'intérieur du véhicule.

### Remarque sur l'état de la technique

Il est à noter que des formes asymétriques à fond aplati ont parfois déjà été proposées dans le passé, avec une base plane pour différentes raisons, indépendantes des problèmes de maniabilité lors de l'atterrissage. Elles n'ont d'ailleurs probablement pas été réalisées ni testées jusqu'à présent.

Le document JP 3 11 2799 propose par exemple un ballon télécommandé comportant un fond rigide aplati pour mieux résister aux coups de vent latéraux.

Le document EP 1 600 370 propose un développement à partir d'un principe d'aviation, en véhicule hybride présentant la forme d'une aile d'avion à portance aérodynamique et qui est allégée en l'emplissant d'un gaz porteur.

Le document DE 41 32 718 propose un ballon en forme de demi-lentille horizontale sans nacelle, et dont le fond est aplati pour permettre d'y fixer des trains d'atterrissage et diminuer la distance au sol lors de l'amarrage à un mât fixé au sol.

Ainsi, les possibilités d'une forme à fond aplati pour faciliter la descente et l'atterrissage ne semblent pas avoir été identifiées jusqu'à présent.

La combinaison de caractéristiques proposée par l'invention, ainsi que la méthode d'atterrissage proposée par l'invention et qui est rendue possible par ces caractéristiques, apportent ainsi des avantages inattendus. Ces avantages peuvent représenter un apport important pour la conception et l'utilisation de dirigeables, en particulier avec un équipage limité aux personnes embarquées, et qui peuvent être capables de se poser sur un terrain non prévu et/ou non préparé.

### Avantages du fond plat près du sol

Une sphère, placée dans le vent, quand elle se rapproche du sol, est rabattue vers le sol (comme illustré en FIGURE 1) mais elle subit différents efforts nuisibles à la stabilité et à l'ancrage.

Le passage du vent sous la sphère provoque un effet de compression locale entre le sol et la sphère, parfois appelé « effet caisson », qui tend à contrarier la rabattance. Cet effet « caisson » peut être irrégulier, et son antagonisme avec la rabattance pourrait contribuer à expliquer les embardées brutales constatées par les pilotes de dirigeables près du sol.

La sphère subit en outre un couple cabreur, qui tend à soulever l'avant de la sphère et contrarie ainsi toute manoeuvre de descente et d'atterrissage.

Dans le cas d'un ballon allongé à section transversale cylindrique, ce soulèvement de l'avant provoquera en outre une portance dynamique supplémentaire du fait du vent, et tendra donc à l'éloigner du sol et à arracher l'ancrage.

L'invention exploite un effet inattendu et jusque là inexploité d'une forme à fond plat, en proposant de combiner cette forme avec une manière d'utiliser cet effet et avec des caractéristiques spécifiques, lesquelles permettent d'utiliser cet effet de façon efficace et pratique au sein d'une manoeuvre d'atterrissage, c'est à dire d'utiliser le vent pour aider à l'atterrissage plutôt que de le laisser contrarier l'atterrissage.

En effet, comme précisé plus haut, un ballon dirigeable demi-sphérique au dessous aplati qui est placé dans le vent et se rapproche du sol est effectivement rabattu vers le sol. Toutefois, la rabattance évolue différemment par rapport à une sphère, possiblement en raison d'un effet « caisson » grandement diminué. Cette rabattance est plus forte mais aussi plus stable que dans le cas de la sphère, ce qui facilite grandement la manoeuvre d'approche du sol dès lors que le véhicule présente les caractéristiques adéquates et utilise une méthode adaptée.

En outre, le couple que subit le dirigeable à fond aplati reste constamment piqueur pendant toute la phase de descente et jusqu'à l'atterrissage. Il tend ainsi en permanence à abaisser l'avant et à le plaquer au sol, ce qui aide à l'atterrissage, à l'ancrage puis à l'arrimage.

De plus, dans le cas d'un dirigeable allongé, le couple piqueur provoqué par le vent tend à amener naturellement le ballon vers une assiette à piquer, ce qui augmente la rabattance dynamique exercée par le vent et aide à amener et maintenir le ballon au sol.

On voit que la forme du véhicule permet d'obtenir une meilleure stabilité et une meilleure maniabilité lors de la phase d'approche et de descente, mais aussi à obtenir une tendance stable et continue du véhicule à rester plaqué au sol lors de l'atterrissage et au cours du stationnement.

### Coopération avec le dispositif d'ancrage

La présence d'un dispositif d'ancrage sous l'avant du dirigeable permet de profiter de cette résultante globale continument rabattante qui amène puis plaque l'avant au sol. Sous l'effet de cette force vers le bas, ce dispositif d'ancrage sous l'avant du dirigeable vient naturellement en contact avec le sol puis s'appuie en permanence sur le sol. Il est donc possible de fixer au sol ce dispositif d'ancrage par des moyens d'amarrage simples, qui n'ont à supporter que peu ou pas d'efforts d'arrachage vers le haut en cas de vent. L'essentiel des efforts à supporter consiste alors en des efforts horizontaux, associés à un effort de compression vers le bas qui est absorbé par compression par le sol. De nombreux moyens d'amarrage sont alors disponibles pour supporter ces efforts horizontaux, et qui même sont souvent aidés par la présence de l'effort vers le bas.

La résultante globale étant une rabattante, la stabilité et une certaine immobilité sont ainsi assurées dès le contact du dispositif d'ancrage avec le sol. Il est donc possible à une personne, à bord du dirigeable, de venir près du sol pour y consolider l'amarrage définitif. Par exemple le pilote peut se permettre de quitter les commandes et de procéder lui-même à l'amarrage.

Par exemple, sur un sol rigide, il peut suffire de planter un piton ou une cheville à frapper muni d'un anneau pour pouvoir y fixer un mousqueton lié au dispositif d'ancrage.

Par exemple dans le cas d'un sol meuble, il peut suffire de laisser une partie pointue du dispositif d'ancrage s'enfoncer dans le sol sous l'effet de la poussée du véhicule vers le bas ou de l'inertie descendante du véhicule. Cet enfoncement peut ensuite être renforcé par exemple à coup de maillet par le pilote restant à bord.

On voit que la forme générale du véhicule, associée à la manoeuvre d'approche, se combine avantageusement avec le dispositif d'ancrage pour permettre un atterrissage et un amarrage facilités, pouvant permettre de s'affranchir partiellement ou même complètement de toute présence matérielle ou humaine au sol. Il devient ainsi possible d'utiliser un tel véhicule de façon beaucoup plus simple et plus souple, pour des déplacements libres sans infrastructure, par exemple pour des vols d'exploration ou de croisière improvisée vers des lieux d'atterrissage non prévus à l'avance.

### Suppression ou diminution des moyens au sol

En particulier, il n'est plus besoin de mobiliser une équipe sur le lieu de l'arrivée. Il n'est plus besoin de disposer d'un mât tel que ceux qui sont actuellement ancrés au sol ou sur camion. Il devient possible de se poser et stationner presque partout.

Dès lors que les besoins en carburant et en vivres sont assurés, on obtient une autonomie complète de l'équipe embarquée, par exemple pour des missions longues et lointaines.

Des passagers de vols touristiques, même en solitaire, peuvent disposer d'une liberté quasi totale pour se poser et visiter des points d'intérêt au sol.

### Caractéristiques de performances

A titre d'exemple, en exploitant les possibilités de l'invention, il est décrit plus loin une projection pour un véhicule de petite taille pour deux personnes, répondant aux normes françaises de la catégorie réglementaire des engins de type Ultra Léger Motorisé (ULM).

Dans le cadre de cette projection, une estimation des possibilités et performances donne les valeurs suivantes :
- Vitesse maximum du dirigeable: 80 km/h,
- Vitesse de croisière continue : 60 km/h,
- Vent au sol admissible en opération: 80 km/h,
- Atterrissage et amarrage possible par le pilote seul sans aide au sol,
- Stationnement au sol sans infrastructure avec vent jusqu'à 140 km/h.

On notera en particulier que cette souplesse d'emploi ainsi que le domaine météorologique présente des avancées très intéressantes vis à vis des possibilités actuelles selon l'état de la technique, et qui sont suffisantes pour permettre une évolution radicale des possibilités d'emploi et des débouchés industriels et commerciaux pour ce type de véhicule.

D'autres particularités et avantages de l'invention ressortiront de la description détaillée d'un mode de mise en oeuvre nullement limitatif, et des dessins annexés sur lesquels :
- la FIGURE 1 est un résultat cartographique des résultats de simulation numérique indiquant les vitesses d'écoulement de l'air de gauche à droite autour d'une sphère proche du sol ;
- la FIGURE 2 illustre par trois courbes la variation des forces s'appliquant à la sphère de la FIGURE 1 en fonction de sa hauteur vis à vis du sol ;
- la FIGURE 3 est un résultat cartographique des résultats de simulation numérique indiquant les vitesses d'écoulement de l'air de gauche à droite autour d'une sphère à fond aplati proche du sol ;
- la FIGURE 4 illustre par trois courbes la variation de plusieurs forces s'appliquant à la sphère à fond aplati de la FIGURE 3 en fonction de sa hauteur vis à vis du sol ;
- la FIGURE 5 est un schéma basé sur la simulation numérique de la FIGURE 3, illustrant les efforts du vent appliqués à un véhicule selon l'invention dans une configuration en demi sphère à fond aplati avec poinçon avant vertical ;
- la FIGURE 6 est un schéma basé sur une cartographie de simulation numérique des vitesses d'écoulement de l'air autour d'une forme en goutte d'eau à fond aplati proche du sol, illustrant les efforts du vent appliqués à un véhicule selon l'invention dans une configuration en goutte d'eau à fond aplati avec poinçon avant vertical et support arrière ;
- la FIGURE 7 est une vue en éclatée représentant un véhicule selon l'invention dans une configuration avec une forme en goutte d'eau à fond plat optimisée par simulation numérique, avec armature tubulaire rigide renfermant deux rangées longitudinales latéralement symétriques de plusieurs ballonnets en forme, avec gouvernes de profondeur dynamiques à l'avant, et avec un poste d'amarrage à puits de descente sous un poste de pilotage avant ;
- la FIGURE 8 est une vue en perspective de l'entoilage du véhicule de la FIGURE 7 ;
- les FIGURE 9a à FIGURE 9d sont des vues de profil représentant le véhicule de la FIGURE 7 dans cinq positions successives au cours d'une procédure d'atterrissage selon l'invention ;
- les FIGURE 10a à FIGURE 10c sont des vues schématiques en coupe de côté illustrant un exemple de mise en oeuvre d'un dispositif d'ancrage pour l'arrimage du véhicule de la FIGURE 7, dans une configuration avec poinçon rétractable et expansible ;
- les FIGURE 11a et FIGURE 11b sont deux demi-vues latérales, en vue extérieure et en coupe, du poinçon de la FIGURE 10, vu de côté en position fermée ;
- les FIGURE 12a et FIGURE 12b sont deux demi-vues latérales, en vue extérieure et en coupe, du poinçon expansible de la FIGURE 10, vu de face en position fermée ;
- la FIGURE 13 est une vue latérale du poinçon expansible de la FIGURE 10, vu de côté en position ouverte ;
- la FIGURE 14 est une vue de dessus du poinçon expansible de la FIGURE 10, vu de côté en position fermée ;
- la FIGURE 15 est une vue en perspective d'une des plaques d'ancrage du poinçon expansible de la FIGURE 10 ;
- les FIGURE 16, FIGURE 17 et FIGURE 18 sont des vues simplifiées de l'enveloppe d'un véhicule aérien selon l'invention, illustrant une définition des surfaces concourant à l'effet aérodynamique recherché, respectivement de côté, de face et en perspective de l'avant par dessous.

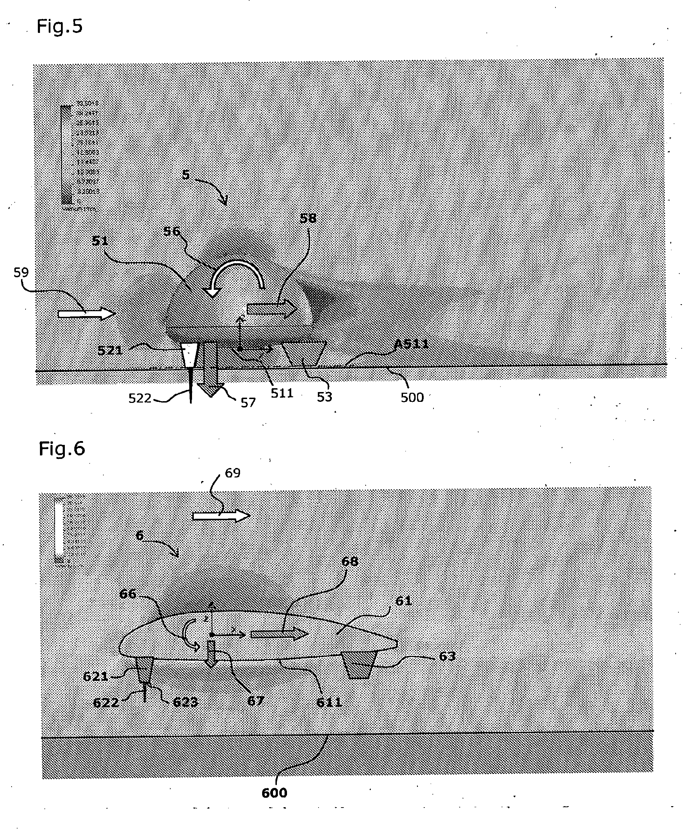

La FIGURE 5 présente un véhicule 5 comprenant la demi-sphère 51 des FIGURE 3 et FIGURE 4 comme forme générale extérieure pour son enveloppe. Le dessous du véhicule est muni à l'avant (sur la gauche de la figure) d'un dispositif d'ancrage 52 rigide, et à l'arrière d'une partie de support 53, par exemple une partie de l'empennage ou un patin de support.

Les différentes flèches représentent schématiquement les directions du vent 59, de la force de traînée 58, et de la rabattance 57 exercés par le vent à l'approche du sol avec son couple piqueur 56, représenté par une flèche dans le sens de l'action exercée sur le véhicule.

Le dispositif d'ancrage comprend une partie de support 521 qui dépasse ou affleure vers le bas par rapport au reste du véhicule, en dessous de l'axe A511 des points les plus bas du véhicule, en particulier lorsque celui-ci est en assiette neutre en fin d'approche du sol.

Sous cette partie de support est montée une partie pointue, dite poinçon 522, selon un axe dirigé vers le bas de façon à permettre un enfoncement dans un sol meuble 500, par exemple selon une direction transversale au sol voire sensiblement verticale.

De préférence, ce dispositif d'ancrage 52 est relié à la structure du véhicule 5 par des moyens de liaison agencés pour maintenir, pendant la phase d'atterrissage et d'ancrage initial, un angle constant entre le véhicule et l'axe A522 du poinçon par rapport au véhicule. Un tel poinçon permet ainsi un premier ancrage direct par enfoncement dans le sol sous le seul effet de la force résultante vers le bas.

La FIGURE 6 présente un véhicule 6 comprenant une enveloppe 61 présentant une forme générale extérieure en goutte d'eau pour son enveloppe avec un fond aplati 611 en approche du sol 600. Le véhicule est muni des mêmes types de dispositifs que celui de la FIGURE 5 : un support arrière 63, un dispositif d'ancrage 62 rigide à l'avant (sur la gauche de figure) comprenant une partie support 621, poinçon 622 et aussi des moyens d'accrochage comme un mousqueton 623.

Le fond de la FIGURE 6 représente une cartographie de simulation numérique des vitesses d'écoulement de l'air autour de l'enveloppe 61. Les zones foncées au dessus et au dessous de l'enveloppe (tendant vers le rouge dans la cartographie en couleur) indiquent des vitesses plus élevées allant approximativement de 22 à 28m/s. Les zones foncées situées à l'avant et à l'arrière de l'enveloppe (tendant vers le bleu dans la cartographie en couleur) indiquent des vitesses plus faibles allant approximativement de 22 à 10m/s.

### Description d'un exemple de véhicule

En exploitant les possibilités de l'invention, il est décrit ici un exemple de véhicule de petite taille pour deux personnes, répondant aux normes françaises de la catégorie réglementaire des engins de type Ultra Léger Motorisé (ULM), dans sa définition préliminaire.

Dans ce cadre, un tel véhicule est prévu avec les caractéristiques suivantes :
- Coque rigide, avec sacs contenant l'hélium sans surpression
- Energie à bord: batteries + panneaux photovoltaïques

### Stabilisateurs et commandes retenues

- quatre empennages fixes, en X, pour leurs qualité de stabilisateurs, et qui assurent notamment la fonction dérive ;
- Trois hélices: 2 pour l'avance et le lacet, 1 pour la sustentation ;
- Une commande de profondeur à deux gouvernes avant dites « canard », de préférence couplées entre elles ;
- Un poinçon rétractable derrière la cabine d'ancrage ;
- Un déplacement longitudinal des batteries pour permettre une correction d'assiette en vol, et un lestage de l'arrière au sol.

Typiquement, ce véhicule est prévu avec une flottabilité positive par vent nul, et possiblement avec une forme à portance positive ou nulle loin du sol et par exemple au delà de 10m.

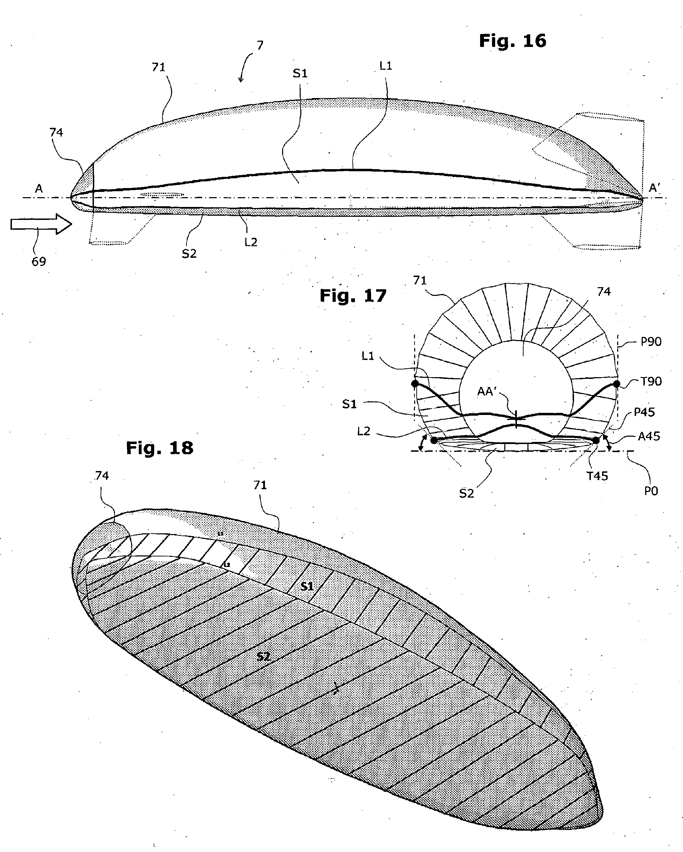

Les FIGURE 16 à FIGURE 18 présente une mode de définition plus précis de les conditions de forme portant sur les surfaces inférieure et intermédiaire, en supposant l'enveloppe 71 dans une incidence ou sa ligne AA' de plus grande longueur est horizontale, ou au moins parallèle au vent.

Tout autour de l'enveloppe, la première ligne dite de ceinture L1 est définie par la succession des points de tangence T90 entre l'enveloppe et un plan vertical P90.

La deuxième ligne de ceinture L2, ou ligne de ceinture intermédiaire à 45°, peut être définie par la succession des points de tangence T45 entre l'enveloppe et un plan P45 incliné par rapport à un plan horizontal P0 d'un angle A45 de 45°.

Une surface S1 dite intermédiaire peut être définie et calculée entre les deux lignes de ceinture L1 et L2, et qui doit être suffisamment inférieure voire très inférieure à la surface inférieure S2 qui est comprise à l'intérieur de cette ligne de ceinture intermédiaire L2.

L'angle d'inclinaison A45 utilisé ici pour la définition de la ligne de ceinture intermédiaire L2 est de 45°, d'autres angles proches pourraient cependant être utilisés, par exemple entre 40° et 60°, tout en gardant le même principe et en ajustant de façon correspondante le rapport entre les deux surfaces S2 et S1.

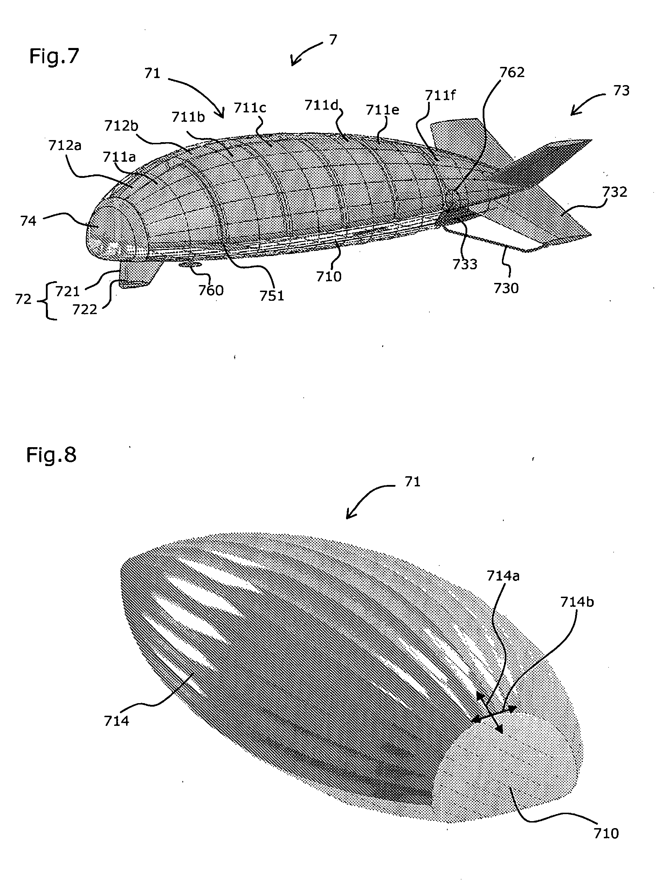

Les FIGURE 7 à FIGURE 15 illustrent plus en détail certaines caractéristiques de l'invention, à titre d'exemple dans le cadre d'une définition de véhicule 7 selon l'invention en version ULM, dans une configuration avec une enveloppe 71 en forme de goutte d'eau à fond plat 711 orientée dans le sens de l'avancement.

Ainsi qu'on le voit en FIGURE 7, ce véhicule comprend deux gouvernes de profondeur 751 horizontales pivotantes réparties des deux côtés de l'avant du véhicule, par exemple couplées entre elles.

Ce véhicule comprend aussi un empennage arrière 73 stabilisateur, en croix de Saint André dans le présent exemple, qui porte une structure inférieure 730 d'appui agencée pour permettre un glissement transversal de l'arrière du véhicule sur le sol, lors d'un évitement en stationnement sous l'effet d'un changement d'orientation du vent. Cette structure d'appui peut être par exemple des patins orientables fixés aux empennages inférieurs ou une barre cintrée vers le bas reliant entre eux les deux empennages inférieurs gauche 732 et droite 733.

Ce véhicule 7 comprend un poste de pilotage avant 74, communiquant avec un poste d'amarrage 72 ou cabine d'ancrage. Ce poste d'amarrage comprend un puits de descente 721 rigide servant de partie de support pour le véhicule. Il inclut un dispositif d'ancrage incluant un mât vertical rétractable et verrouillable, libre en rotation et portant un poinçon 722 dirigé vers le bas ainsi qu'un dispositif d'accrochage 723.

Cette cabine d'ancrage peut aussi communiquer avec l'extérieur pour permettre un débarquement et/ou embarquement humain du véhicule lorsqu'il est dans sa position au sol, par exemple par une porte 803.

Ce poste d'amarrage est disposé suffisamment proche des moyens d'ancrage ou d'arrimage 722 et 723 pour permettre à une personne de toucher le sol au point d'ancrage sans débarquer du véhicule. Il est ainsi possible de vérifier ou compléter l'ancrage avant de débarquer, ou de débloquer ou alléger l'ancrage après avoir embarqué. On peut ainsi limiter les risques d'un envol sans le pilote, par exemple si le pilote a débarqué lors de manoeuvres complémentaires d'amarrage ou de désamarrage.

Le corps 71 du véhicule est formé principalement par une armature 710 rigide en treillis de tubes portant deux moteurs latéraux arrières 762 de propulsion horizontale et optionnellement un moteur vertical de correction d'assiette 761 sous la partie avant.

Ainsi qu'illustré en FIGURE 8, la structure en treillis est recouverte d'un entoilage 714 en toile légère, mise en tension selon deux directions différentes 714a, 714b. La structure rigide 610 renferme deux rangées 712, 713 longitudinales latéralement symétriques de plusieurs ballonnets en forme 712a-712f, remplis d'hélium, la multiplicité des ballonnets permettant une meilleure stabilité latérale et longitudinale. En outre, la structure rigide permet d'éviter de mettre en surpression les ballonnets d'hélium, et donc réduit beaucoup les fuites d'hélium depuis les ballonnets.

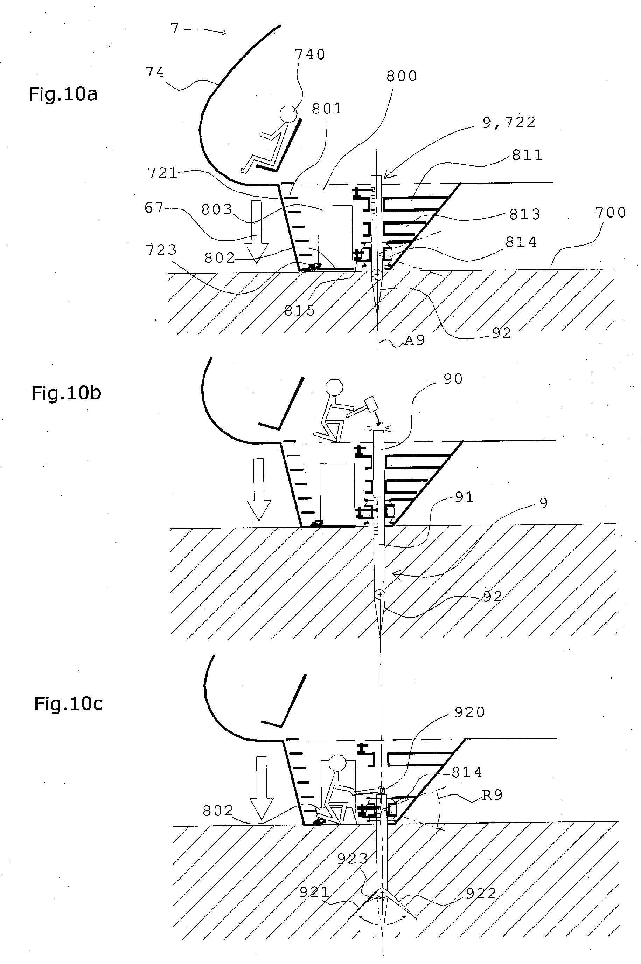

Ainsi que détaillé plus loin en référence à la FIGURE 10, le poinçon est mobile entre :
- une position rétractée dans laquelle la partie d'enfoncement dépasse moins ou pas du tout du dessous de la partie avant du véhicule, limitant ainsi l'encombrement et les risques d'accrochage de la pointe ;
- une position d'ancrage dans laquelle il dépasse du véhicule suffisamment pour permettre un ancrage par enfoncement en phase d'atterrissage.

Cette position d'ancrage peut aussi présenter plusieurs positions plus ou moins sorties, par exemple l'une dépassant faiblement pour l'ancrage initial direct lors du premier contact, et une autre plus enfoncée pour un arrimage plus complet.

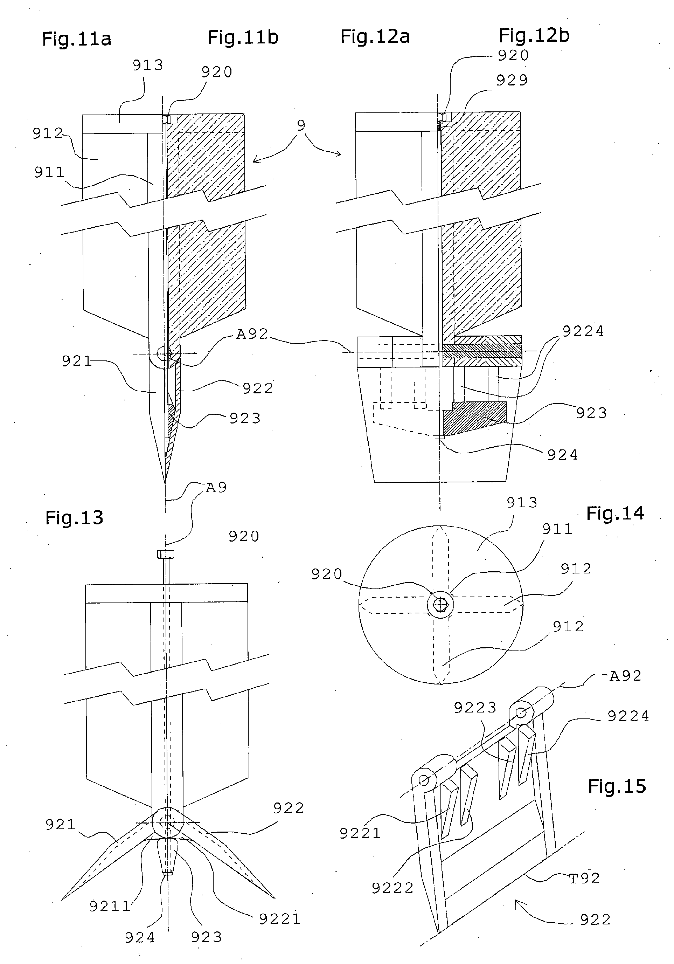

Ainsi qu'on le voit en FIGURE 11 et FIGURE 12, le corps 91 du poinçon 9 comprend un corps 91 terminé par une partie pointue ou effilée 92. Il comprend aussi une partie expansible incluant deux éléments 921, 922 mobiles entre :
- une position rétractée (FIGURE 11) ne dépassant pas hors de la section du poinçon transversalement à sa direction d'enfoncement ; et
- une position expansée (FIGURE 13) leur permettant de prendre appui sur le sol vers le haut.

Ces éléments mobiles sont amenés en position expansée par appui de quatre rampes 9221-9224, portées par chacune des plaques, contre une noix 923 déplacée le long de l'axe A9 par des moyens de translation.

Les éléments mobiles comprennent deux plaques mobiles 921, 922 reliées entre elles par une liaison pivot selon un axe A92 transversal à l'axe d'enfoncement A9. Elles sont écartées par le déplacement vers le haut d'une noix 923 translatée par une tige de manoeuvre 920 munie d'une tête hexagonale. Cette tige de manoeuvre 920 comprend une tige filetée manoeuvrée par une tête hexagonale. Cette tige traverse la noix pour la déplacer vers le haut par un épaulement 924 formant. Elle coopère pour cela par un mécanisme vis-écrou avec le corps 91 du poinçon, par exemple par un filetage 929 situé en partie supérieure pour en permettre la manoeuvre aisée et un entretien plus facile.

Ces deux plaques mobiles 921, 922 présentent des extrémités libres qui se rejoignent, dans leur position rétractée, en alignement selon au moins une ligne de tranchant T92. Elles présentent alors une forme comparable à la lame d'une pelle, et forment ainsi une extrémité d'enfoncement pour la partie pointue 92.

Ainsi qu'on le voit en FIGURE 11 et FIGURE 12, le corps 91 du poinçon 9 comprend une partie centrale 911 cylindrique entourée de plusieurs ailettes 912 parallèles à la direction d'enfoncement A9, qui renforcent la rigidité du poinçon en limitant la section transversale de sol à déplacer lors de l'enfoncement. Ces ailettes sont surmontées par une tête cylindrique verticale 913, qui rigidifie l'ensemble et peut supporter des chocs pour compléter l'enfoncement. Cette tête de poinçon 913 comprend un logement permettant de protéger la tige filetée 920.

### Description d'un exemple de procédure d'atterrissage

Un exemple de procédure d'atterrissage et d'arrimage par le pilote seul présente les étapes suivantes :
- le pilote sort le « poinçon » 722, au moins partiellement, avant d'amorcer la descente vers le sol ;
- le pilote ajuste la propulsion pour obtenir une vitesse horizontale par rapport au sol nulle ou faible ;
- il déclenche puis contrôle la descente en agissant sur les gouvernes de profondeur 751 de type « canard », jusqu'à obtenir un contact du sol à l'arrière 730, puis à l'avant par la cabine d'ancrage ;
- vérification de l'efficacité de l'ancrage en réduisant la propulsion ;
- descente du pilote dans la cabine d'ancrage 722 ;
- dans le cas d'un sol dur : sans quitter le bord, le pilote fabrique le point fixe et y accroche le véhicule par un mousqueton 723 ;
- dans le cas d'un sol meuble: sans quitter le bord, le pilote complète d'ancrage, par un ancrage mécanique et/ou l'ancrage par un lest, si possible pour une force d'arrachage d'une valeur supérieure voire largement supérieure à son poids, en particulier pour le cas de vent nul ;
- puis le pilote débarque, et peut lester l'avant de façon supplémentaire pour atteindre en lest le poids total qui est appelé à débarquer ;
- optionnellement, les batteries sont repoussées plein arrière par un guide coulissant pour lester et stabiliser l'arrière ;
- optionnellement, les patins arrière sont positionnés transversalement pour faciliter la rotation d'évitement.

Le ou les passagers peuvent alors débarquer, le pilote vérifier l'arrimage et désactiver les systèmes avant de quitter le véhicule en stationnement.

Un exemple de procédure de décollage par le pilote seul peut présenter les étapes suivantes :
- le pilote vérifie le bon état de l'appareil ;
- pesée des passagers, ajustement éventuel du ballast avant ;
- remise des patins arrière en position vol ;
- embarquement des passagers, batteries ramenées en position vol ;
- délestage de l'avant, récupération éventuelle de l'ancrage en sol dur ;
- si vent significatif, commande propulsion pour neutraliser la traînée ;
- au besoin effet de levier par appui sur le sol pour sortir le poinçon du sol, puis action sur les gouvernes canard, ou sur commande de sustentation, pour lever l'avant ;
- montée à plus de 10 mètres face au vent, puis rentrée complète du poinçon.

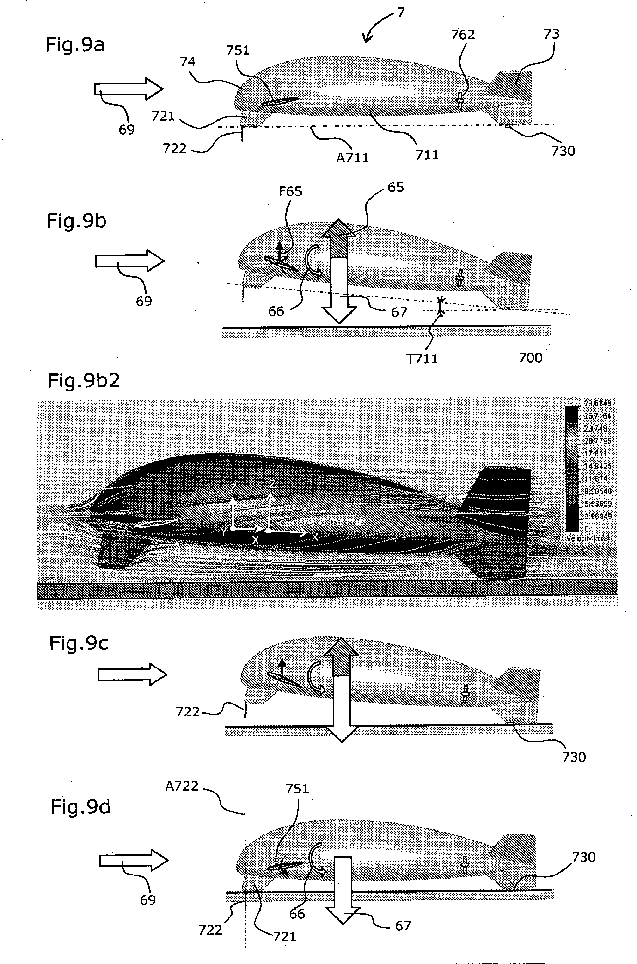

Les FIGURE 9a à FIGURE 9d illustrent plus en détail une procédure d'atterrissage de dirigeable selon l'invention.

Déclenchement de la descente : FIGURE 9a : le véhicule 7 se rapproche du sol par une descente, avec une propulsion 762 ajustée face au vent 69 pour obtenir une vitesse nulle par rapport au sol. Cette descente est déclenchée et entretenue, en particulier, par une commande des gouvernes de profondeur 751 ajustées vers le bas pour obtenir un angle de piqué fournissant une résultante aérodynamique vers le bas.

Arrivé à une certaine hauteur du sol 700, la vitesse du vent relatif 69 exerce sur le dirigeable une force rabattante vers le bas 67 qui augmente (cf. FIGURE 4). Au fur et à mesure de cette descente, le pilote compense cette augmentation pour contrôler la descente, en ramenant les gouvernes de profondeur 751, vers une position qui correspondrait à une assiette neutre à une hauteur de croisière éloignée du sol.

Contrôle de la descente par cabré : FIGURE 9b : en poursuivant la descente, la force rabattante 67 exercée par le vent augmente encore. Le pilote continue à compenser cette augmentation pour contrôler la descente, en orientant les gouvernes de profondeur avant 751 pour provoquer une action F65 qui augmente l'angle d'incidence T711 de la face inférieure 711 du dirigeable.

Le réglage vers cette incidence cabrée provoque une portance supplémentaire 65, qui permet de compenser l'effet 67 de la rabattance telle qu'elle s'exercerait sur le dirigeable en assiette neutre. En ajustant ce cabrage, le pilote peut ainsi régler précisément la descente. Il peut aussi la suspendre complètement et rester en vol horizontal voire stationnaire.

La FIGURE 9b2 est une simulation numérique, dans une situation où l'arrière du véhicule va prendre contact avec le sol (écart environ 1 cm), établie pour un véhicule d'un volume de 900 m3 dans un vent de 80 km/h, dans une assiette formant une incidence de 3,5° par rapport à l'assiette neutre en vol de croisière.

Le tableau suivant donne les valeurs calculée pour la résultante des forces et couples aérodynamiques exercés sur le véhicule :

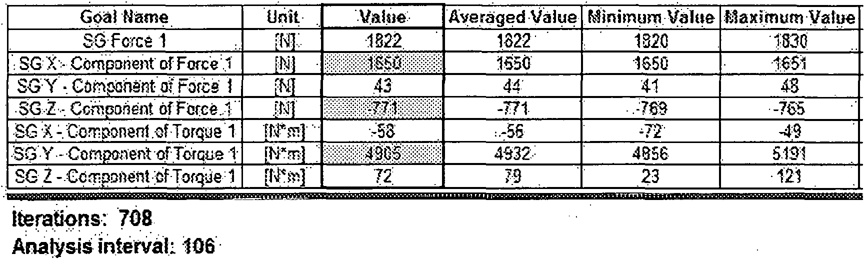

Dans l'ordre du tableau, ces composantes se décomposent comme suit :
Forces aérodynamiques :
   - SG X - Component of Force 1 : composante Fx selon l'axe X, soit la traînée (intensité : 1650 N)
   - SG Y - Component of Force 1 : composante Fy selon l'axe Y, poussée latérale (faible : artefact de calcul dû aux itérations)
   - SG Z - Component of Force 1 : composante FZ selon l'axe Z, soit une force résultante de type rabattante (intensité : -771 N c'est à dire vers le bas)
Couples aérodynamiques :
   - SG X - Component of Torque 1 : couple Mx autour de l'axe X, couple de roulis (faible : artefact de calcul dû aux itérations)
   - SG Y - Component of Torque 1 : couple My autour de l'axe Y, couple piqueur 66 (intensité : 4905 Nm)
   - SG Z - Component of Torque 1 : couple MZ autour de l'axe Z, couple de lacet (faible : artefact de calcul dû aux itérations)

Ainsi qu'on le constate, la force résultante est bien orientée vers le bas, même dans une incidence qui permet de la garder à une valeur suffisamment faible (771 N) pour permettre un contact maîtrisé et sans dommage.

Le couple résultant est issu de la combinaison des différentes composantes appliquées au véhicule, et incluent en particulier : le couple piqueur 66 dû à la forme de l'enveloppe, le couple cabreur provoqué par l'action F65 des gouvernes canards 751 et potentiellement de l'incidence elle-même, ainsi que l'effet de stabilisation de l'empennage arrière 73. Ainsi qu'on le voit, la valeur résultante non nulle (4905 Nm) et dans le sens du cabrage (positive), même dans le cas d'une position à piquer des gouvernes 751 (calculs effectués pour une position du canard à -11,5° par rapport au véhicule) indique qu'il est possible d'obtenir encore une augmentation de l'incidence, et donc que l'arrière 730 du véhicule vienne effectivement en contact avec le sol.

Contact par l'arrière : FIGURE 9c : Ainsi, en gardant un vol descendant contrôlé dans une incidence cabrée, la traverse de support arrière 730 du dirigeable finit par venir en contact avec le sol 700.

Le pilote commande alors les gouvernes de profondeur 751 de façon à obtenir une réduction de l'angle de cabré T711, jusqu'à obtenir le contact de la partie avant du dirigeable avec le sol sous l'effet de cette force rabattante 67 dont l'effet se traduit alors lui aussi par un couple piqueur une fois que l'arrière est soutenu par le sol.

Au fur et à mesure que le cabré diminue, la rabattante globale augmente à nouveau et se combine au couple piqueur (aérodynamique et issu du contact de l'arrière) pour appuyer l'avant sur le sol. Le pilote peut utiliser les gouvernes 751 dans la direction à cabrer (par exemple à une incidence de l'ordre de 40°) pour continuer à compenser F65 cette force et maîtriser le contact de l'avant avec le sol.

Contact par l'avant et ancrage initial : FIGURE 9d : Au contact du sol, en remettant les gouvernes 751 dans la direction à piquer, l'avant est alors plaqué et maintenu au sol avec une force importante, qui peut être de l'ordre de 6000 N pour le même véhicule.

Dans le cas d'un sol meuble, le poinçon 722 va s'enfoncer dans le sol 700 sous l'effet de la rabattante globale 67 qui subsiste dans la position au sol du dirigeable. On voit que la cabine d'ancrage 721 qui porte le poinçon dépasse sous la surface inférieure 711 suffisamment pour empêcher le dirigeable 7 de descendre plus bas, et l'empêcher ainsi de sortir de la plage de hauteur dans laquelle la résultante 67 est vers le bas (aux alentours de 20 cm en FIGURE 4) et le couple 66 est piqueur (environ 50cm en FIGURE 4), ou plage de rabattance : à droite de la ligne verticale en pointillés en FIGURE 4.

L'avant étant plaqué contre le sol, la situation du dirigeable est stable et permet ainsi un stationnement prolongé, en compensant si besoin la trainée 68 à l'aide de la propulsion 762.

Il est alors possible de lâcher et/ou bloquer les commandes pour procéder à un arrimage complémentaire au sol de l'avant du véhicule, par exemple en enfonçant le poinçon 722 plus profondément, ou en plantant un piton d'accrochage dans le sol s'il s'agit d'un sol dur. Une fois l'arrimage réalisé, il est alors possible de désactiver la propulsion et de quitter complètement le véhicule.

Il est à noter que l'ensemble de la manoeuvre peut être envisagée sans moteur vertical correction d'assiette 761 s'il y a un vent significatif.

Il est à noter que les différentes actions exercées par le pilote sur les gouvernes de profondeur 751 pour déclencher puis contrôler la descente ainsi que les contacts de l'avant et l'arrière vont dans le sens le plus instinctif pour la manoeuvre des gouvernes par rapport aux mouvement du véhicule, ce qui limite la complexité et les risques de l'opération.

Pour les différents réglages d'incidence de l'enveloppe, et en particulier les réglages lents ou par vent faible, les gouvernes de profondeur 751 peuvent en outre être assistées par des réglages de position du centre de gravité, par exemple par déplacement longitudinal des batteries d'accumulateurs électriques.

Dans cette position de stationnement (FIGURE 9d), la résultante 67 restant dirigée vers le bas, l'arrimage s'oppose principalement à la force de trainée 68 parallèle au sol. Le dispositif d'ancrage 72 permet une libre rotation autour du point d'ancrage, ce qui permet au dirigeable d'« éviter » pour suivre la direction du vent. Cette rotation est rendue possible par pivotement autour de l'axe A722 du poinçon, ou d'un axe vertical portant des moyens d'arrimage 723.

Dans le cas d'un sol meuble, le dispositif d'ancrage 72 retient le dirigeable simplement en maintenant un angle constant entre l'axe A722 du poinçon et le sol, ce qui évite audit poinçon de s'extraire du sol et lui permet de s'opposer à la trainée 68. Dans le cas d'un sol dur, un mousqueton d'accrochage 723 peut suffire à retenir le dirigeable sans arracher le piton.

Les FIGURE 10 à FIGURE 15 illustrent plus en détail un exemple de véhicule tel que décrit en référence avec la FIGURE 7 dans une configuration avec poinçon rétractable et expansible.

Les FIGURE 10a à FIGURE 10c illustrent plus particulièrement sa mise en oeuvre au sein d'une procédure d'atterrissage et d'arrimage rendue possible par cette configuration.

Le dispositif d'ancrage 72 du dirigeable 7 comprend une cabine d'ancrage 721 situé à proximité immédiate du poste de pilotage 74 utilisé pour contrôler l'atterrissage.

En FIGURE 10a : à l'issue de la procédure d'atterrissage décrite en référence aux FIGURE 9a à FIGURE 9d, le dirigeable est posé sur le sol 700. Le dirigeable est plaqué sur le sol à travers sa cabine d'ancrage 721 par la rabattance 67. Son poinçon 722, ici dans une configuration 9 rétractable et expansible, comprend une partie pointue 92 dépassant vers le bas qui s'est plantée d'elle même dans le sol sous l'effet de cette rabattance et possiblement de l'inertie du dirigeable. Cette partie pointue 92 présente ici un allongement autour d'un plan vertical pour former une extrémité en forme de lame. Elle pourrait aussi présenter une pointe par allongement le long d'une ligne parallèle à l'axe d'enfoncement.

En FIGURE 10b : la situation du dirigeable étant stable, le pilote 740 peut quitter son poste de pilotage 74. Dans le cas d'un sol dur ou d'un mauvais enfoncement initial du poinçon, il est possible de maintenir l'immobilité horizontale de façon dynamique en maintenant un régime de propulsion bloqué ou asservi, par exemple pendant deux à cinq minutes qui permettront de procéder à l'arrimage proprement dit.

Il libère le cliquet 812 qui maintenait le poinçon 9 dans sa position rétractée (FIGURE 10a), et procède à un enfoncement complémentaire du poinçon 9 dans le sol, par exemple à l'aide d'un maillet et par l'intermédiaire d'une rallonge 90. Pour cela, le corps 91 du poinçon 9 coulisse vers le bas à travers plusieurs guides 811, 813 et 814 pendant que la partie pointue 92 s'enfonce dans le sol, et peut être verrouillé par un cliquet 815. Un ou plusieurs guides de coulissement 813 peuvent être amovibles, par exemple pour gagner de l'espace dans le passage et pour accéder à l'extrémité de manoeuvre 920 du poinçon.

En FIGURE 10c : le pilote est descendu dans le puits 800 de la cabine d'ancrage 721 par l'échelle 801, et peut accéder au sol autour du point d'enfoncement par une trappe 802 pour vérifier la nature du sol ou procéder à l'accrochage d'un mousqueton 723. Une fois le poinçon 9 enfoncé à une profondeur satisfaisante, sa partie pointue 92 s'écarte en deux parties 921, 922, qui prennent appui dans le sol pour exercer une force d'ancrage vers le bas. Cet écartement est par exemple obtenu en manoeuvrant la tête de manoeuvre d'une tige filetée 920.

Le ou les guides de coulissement 814 qui reçoivent encore le poinçon 9 dans sa position enfoncée (FIGURE 10c) sont reliés au véhicule par dispositif 816 comprenant une liaison pivot complètement libre autour de l'axe d'enfoncement A9 du poinçon, et une liaison rotule munie de butées et possiblement d'amortisseurs et de verrous d'inclinaison pour les angles d'inclinaison R9 selon les deux autres axes de pivotement. Le véhicule peut ainsi pivoter librement avec le vent, et absorber les variations permanentes ou temporaires de l'inclinaison du dirigeable par rapport au poinçon et au sol.

Bien sûr, l'invention n'est pas limitée aux exemples qui viennent d'être décrits et de nombreux aménagements peuvent être apportés à ces exemples sans sortir du cadre de l'invention.

## Revendications

1. Procédé d'atterrissage d'un véhicule aérien de type ballon dirigeable motorisé à flottabilité au moins partielle (7) présentant une forme générale définie par une partie supérieure qui est arrondie et une face inférieure (511, 611, 711) de forme plane ou très peu galbée, produisant ainsi une force résultante globale dirigée vers le sol, dite force rabattante (67), notamment avec un moment global piqueur (56, 66),
et comprenant en partie avant une ou plusieurs gouvernes de profondeur et un dispositif d'ancrage rigide,
ledit procédé comprenant les étapes suivantes :
- descente vers le sol avec une vitesse vers l'avant non nulle par rapport à l'atmosphère, jusqu'à une distance du sol (700) à laquelle la vitesse du vent relatif (69) exerce sur le dirigeable en assiette neutre une force résultante globale dirigée vers le sol, dite force rabattante (67), notamment avec un moment global piqueur (56, 66) ;
- commande des gouvernes de profondeur (751) de façon à obtenir un angle de cabré (T711) fournissant une portance (65) qui compense partiellement la force rabattante (67), provoquant ainsi un vol descendant, jusqu'à obtenir un contact (FIGURE 9c) d'une partie arrière (730) du dirigeable avec le sol (700) ;
- commande des gouvernes de profondeur (751) de façon à obtenir une réduction de l'angle de cabré (T711) jusqu'à obtenir un contact d'une partie avant (722, 721) du dirigeable avec le sol sous l'effet de ladite force rabattante (67).

2. Procédé selon la revendication 1, **caractérisé en ce qu'**il comprend en outre une étape d'ancrage au sol de l'avant du véhicule (7), produit par un appui contre le sol (700) d'un élément d'ancrage (722) porté par la partie avant dudit véhicule, sous l'effet de la force rabattante (67) lors de la réduction de cabré après contact ou dans une assiette neutre ultérieure.

3. Procédé selon la revendication 2, **caractérisé en ce que** l'ancrage au sol est obtenu, au moins partiellement, par enfoncement dans le sol d'un élément d'ancrage pointu dit poinçon (522, 622, 722, 9), sous l'effet de la force rabattante (67) lors de la réduction de cabré après contact ou dans une assiette neutre ultérieure.

4. Procédé selon la revendication 3, **caractérisé en ce qu'**il comprend en outre un maintien au sol du véhicule (7) grâce à :
- une immobilisation en translation par rapport au sol (700), obtenue au moins partiellement par maintien du poinçon (9) enfoncé dans le sol ; et
- une rotation libre sous l'effet du vent, obtenue par une liaison rotule entre le véhicule et ledit poinçon, incluant une rotation complètement libre autour de l'axe (A9) du poinçon et un débattement libre en rotation (R9) autour d'au moins un axe horizontal.

## Patentansprüche

1. Landungsverfahren eines Luftfahrzeugs vom Typ motorbetriebenes Luftschiff mit wenigstens teilweisem statischem Auftrieb (7), wobei es in einer Grundform ausgeführt ist, welche aus einem gerundeten oberen Teil und einer planen bzw. sehr leicht gewölbten Unterseite (511, 611, 711) besteht, wobei damit eine gesamte abwärts gerichtete, resultierende Kraft, der sogenannte Abtrieb (67), insbesondere mit einer Gesamt-Kopflastigkeit (56, 66), hervorgerufen wird,
und das im vorderen Teil ein oder mehrere Höhenruder sowie eine starre Ankervorrichtung umfasst,
wobei das genannte Verfahren folgende Schritte umfasst:
- Abflug mit einer Geschwindigkeit nach vorne nicht gleich Null relativ zur Luft, bis zu einem Bodenabstand (700), an dem die relative Windgeschwindigkeit (69) eine resultierende, abwärts gerichtete Gesamtkraft, den sogenannten Abtrieb (67), insbesondere mit einer Gesamt-Kopflastigkeit (56, 66), auf das Luftschiff in neutraler Fluglage ausübt;
- Steuerung der Höhenruder (751), um einen Steigwinkel (T711) zu erreichen, der einen dynamischen Auftrieb (65) zum teilweisen Ausgleich des Abtriebs (67) erzeugt, wobei somit ein Abflug hervorgerufen wird, bis ein Kontakt (Fig. 9c) eines hinteren Teils (730) des Luftschiffs mit dem Boden (700) erreicht wird;
- Steuerung der Höhenruder (751), um eine Verringerung des Steigwinkels (T711) zu erzielen, bis ein Kontakt eines vorderen Teils (722, 721) des Luftschiffes mit dem Boden unter Einwirkung des genannten Abtriebs (67) erreicht wird.

2. Verfahren nach Anspruch 1, **dadurch gekennzeichnet, dass** es außerdem einen Schritt zur Verankerung des Vorderteils des Fahrzeugs (7) am Boden umfasst, dadurch erzielt, dass eine am Vorderteil des genannten Fahrzeugs aufgenommene Ankerkomponente (722) unter Einwirkung des Abtriebs (67), während der Reduzierung des Steigwinkels nach Bodenkontakt oder in einer späteren neutralen Fluglage zum Boden (700), hin gedrückt wird.

3. Verfahren nach Anspruch 2, **dadurch gekennzeichnet, dass** die Verankerung am Boden zumindest teilweise dadurch erzielt wird, dass eine spitze Ankerkomponente, ein sogenannter Ankerzapfen (522, 622, 722, 9) unter Einwirkung des Abtriebs (67) während der Reduzierung des Steigwinkels nach Bodenkontakt oder in einer späteren neutralen Fluglage, im Boden versenkt wird.

4. Verfahren nach Anspruch 3, **dadurch gekennzeichnet, dass** es außerdem ein Festhalten des Fahrzeugs (7) am Boden umfasst, mittels:
- einer Ruhigstellung der horizontalen Verschiebung relativ zum Boden (700), die zumindest teilweise durch Festhalten des im Boden versenkten Ankerzapfens (9) erreicht wird; und
- einer freien Rotation unter Einwirkung des Windes, durch ein Kugelgelenk zwischen dem Fahrzeug und dem genannten Ankerzapfen erzielt, wobei sie eine vollkommen freie Rotation um die Achse (A9) des Ankerzapfens und einen freien Rotationsspielraum (R9) um mindestens eine horizontale Achse enthält.

## Claims

1. Method of landing an aircraft (7) of the powered airship type with at least partial buoyancy having a general shape defined by an upper portion that is rounded and a bottom face (511, 611, 711) of flat or very slightly curved shape, thus producing an overall resultant force directed towards the ground, a force called downward force (67), in particular with an overall nose-down torque (56, 66),
and comprising, in the front portion, one or more elevators and a rigid anchoring device,
said method comprising the following steps:
- descending towards the ground with a forward velocity that is not zero relative to the atmosphere, as far as a distance from the ground (700) at which the relative wind speed (69) exerts on the airship in neutral attitude, an overall resultant force directed towards the ground, called downward force (67), in particular with an overall nose-down torque (56, 66);
- operating the elevators (751) so as to obtain a nose-lift angle (T711) supplying a lift (65) that partially compensates the downward force (67), thus causing descending flight, until contact (FIGURE 9c) of a rear portion (730) of the airship with the ground (700) is obtained;
- operating the elevators (751) so as to obtain a reduction of the nose-lift angle (T711) until contact of a front portion (722, 721) of the airship with the ground is obtained under the effect of said downward force (67).

2. Method according to claim 1, **characterized in that** it further comprises a step of anchoring the front of the aircraft (7) on the ground, produced by an anchoring element (722) carried by the front portion of said aircraft bearing against the ground (700), under the effect of the downward force (67), during the reduction of nose lift after contact or in a subsequent neutral attitude.

3. Method according to claim 2, **characterized in that** the anchoring on the ground is obtained, at least partially, by the driving into the ground of a pointed anchoring element called a punch (522, 622, 722, 9), under the effect of the downward force (67) during the reduction of nose lift after contact or in a subsequent neutral attitude.

4. Method according to claim 3, **characterized in that** it further comprises holding the aircraft (7) on the ground by means of:
- immobilization in translation relative to the ground (700), obtained at least partially by keeping the punch (9) driven into the ground; and
- free rotation under the effect of the wind, obtained by a swivel linkage between the aircraft and said punch, including completely free rotation about the axis (A9) of the punch and a free rotational displacement (R9) about at least one horizontal axis.
